# EUROPEAN PATENT APPLICATION

(11) **EP 3 312 630 A1**
(43) Date of publication of application: **25.04.2018**
(21) Application number: 16200595.3
(22) Date of filing: 24.11.2016
(51) Int. Cl.: G01S 13/86, G01S 13/95, G01K 11/00

(54) **REMOTE OBSERVATION SYSTEM AND METHOD FOR AEROSOL, CLOUD AND RAINFALL**

(30) Priority: 24.10.2016 KR 20160138148
(71) Applicant: Korea Meteorological Administration, Seoul 07062 (KR)
(72) Inventor: Park, Dong Oh, Seoul (KR); Chang, Ki-Ho, Seoul (KR); Kang, Miyoung, Seoul (KR); Seo, Seongkyu, Seoul (KR); Kim, Baek-Jo, Seoul (KR)
(74) Representative: Rüger, Barthelt & Abel

(57) **Abstract**

The present invention relates to a remote observation system and method for aerosol, cloud and rainfall. The remote observation system according to the present invention includes: a radar for calculating a rain cloud profile; a GNSS for calculating total rain cloud profiles; a radiometer for calculating a light cloud profile; and a lidar for calculating an aerosol profile. The remote observation method according to the present invention includes: the first step of calculating a rain cloud profile by means of a radar; the second step of calculating total rain cloud profiles by means of a GNSS; the third step of calculating a light cloud profile by means of a radiometer; and the fourth step for calculating an aerosol profile by means of a lidar.

## Description

### [Technical Field]

The present invention relates to a remote observation system and method for aerosols, clouds and rainfall.

### [Background Art]

It necessarily rains again even after the rain gets the ground wet as if the supply of rain is kept, without any stop. This is caused by an amazing circulation cycle composed of three important processes, that is, evaporation, condensation and rainfall processes. Referring to the three processes, first, the oceans hold about 97 percent of the Earth's water, and the remaining three percent is distributed in glaciers and ice, lakes, and aquifers.

The water held in the oceans is converted into a gas, that is, water vapors, through evaporation. Solar heat yearly evaporates 400,000 m³ of water on the land and sea to the atmosphere. Recirculation of water is generated in the atmosphere up to a height of 10 to 20 kilometers from the ground, and as air gets warmer, a larger amount of water is retained.

The water vapors serve to have important functions in the atmosphere, but even though they just remain in the atmosphere, there is a limitation in the generation of natural rainfall. Further, the water is converted into a liquid through condensation. The atmosphere is full of extremely fine particles like smoke, fine dust, see salt particles and so on. In addition to such solid particles, charged particles serve as condensation nuclei, and as a temperature of a portion of air gets lowered, the water vapors become condensed to fine condensation nuclei. As a result, tiny water droplets produce visible clouds. Many clouds do not produce rain or rainfall at all.

First, rainfall means all forms of water falling to the ground through the condensation of water within clouds.

In more detail, the rainfall is the form of rain drops falling to the ground through collection of clould particles. However, the formation process of rainfall and every process until the rain falls to the ground are not simple. Like people nowadays, people in the old days build various theories from rainfall phenomena, and of course, the theories have some problems. So as to solve such problems and to propose more accurate explanations, accordingly, the rainfall phenomena have been discussed with two theories newly built. One of the two theories, which is widely prevailed, is a Bergeron-Findeisen theory in which if ice crystals exist, water vapors produced by the evaporation of water droplets are attached to the ice crystals and grow thereon. The other theory is a Coalescene theory in which water droplets having different sizes fall down through integration and capture. However, the respective theories cannot perfectly explain the rainfall phenomena only with their theory. Since real situations are not simple actually, the two theories are explained together, and if necessary, they are explained with something new.

According to the current knowledge, further, it is known that some meterological conditions should be prepared for the formation of rainfall.

Firstly, a low temperature capable of cooling air to a dew point has to be prepared, and secondly, condensation nuclei capable of forming water droplets in clouds have to be prepared. Thirdly, a small number of condensed powder particles have to be gradually increased, and lastly, water having sufficient strength and amount has to be collected and expanded. The condensation in the atmposhere means the condensation of water droplets like cloud particles, fogged air and so on.

Further, there are theories explaining the principle where rain drops or snowflakes are produced from clouds. The first theory of them is the Bergeron-Findeisen theory in which when a top of cloud is under 0°C, supercooled water droplets and ice crystals exist together in the cloud. Through the difference of a saturated vapor pressure between the supercooled water droplets and the ice crystals, at this time, the water droplets are evaporated, and the ice crystals are rapidly grow and become snow crystals. During the snow crystals fall, they are attached to each other to form the snowflakes, and otherwise, the remaining snow crystals collide against the supercooled water droplets and become snow pellets. If an air temperature around the ground is high, the snow crystals are melt to form rain. The second theory of them is the Coalescene theory in which if relatively large cloud crystals exist, they are integrated with small cloud crystals, while falling, and they grow to the form of rain drops and fall down.

Accordingly, rainfall is formed through the development of condensation nuclei, cloud water droplet particles, and rainfall, and in this case, there is no equipment for observing the formation proces of the rainfall at a time. There is a definite need for the developement of a system capable of totally observing aerosols, clouds and rainfall.

### [Disclosure]

### [Technical Problem]

Accordingly, the present invention has been made in view of the above-mentioned problems occurring in the prior art, and it is an object of the present invention to provide a remote observation system that is capable of totally observing condensation nuclei, clouds and rainfall to detect their mutual relationship through a ground-based verification network composed of ground observation equipment.

### [Technical Solution]

To accomplish the above-mentioned object, according to a first aspect of the present invention, there is provided a remote observation system including: a radar for calculating a rain cloud profile; a global navigation satellite system (hereinafter, referred to as 'GNSS') for calculating total rain cloud profiles; a radiometer for calculating a light cloud profile; and a lidar for calculating an aerosol profile.

According to the present invention, desirably, particles having sizes of 0.1 to 1 µm are observed through the lidar, particles having sizes of 1 to 100 µm through the radiometer, particles having sizes of 100 to 1000 µm through the radar, and particles having sizes of 100 to 1000 µm through the GNSS.

According to the present invention, desirably, the concentrations of the aerosols are observed through the lidar, liquid water contents of the light cloud through the radiometer, the liquid water content and fall velocity of the rain cloud through the radar, and the liquid water content of the rain cloud through the GNSS.

According to the present invention, desirably, a wavelength of 11 x 10⁴ to 0.25 mm is used by means of the lidar, a wavelength of 0.1 to 100 mm by means of the radiometer, a wavelength of 10 to 230 mm by means of the radar, and a wavelength of 100 to 1000 mm by means of the GNSS.

To accomplish the above-mentioned object, according to a second aspect of the present invention, there is provided a remote observation method including: the first step of calculating a rain cloud profile by means of a radar; the second step of calculating total rain cloud profiles by means of a GNSS; the third step of calculating a light cloud profile by means of a radiometer; and the fourth step for calculating an aerosol profile by means of a lidar.

According to the present invention, desirably, particles having sizes of 0.1 to 1 µm are observed in the fourth step, particles having sizes of 1 to 100 µm in the third step, particles having sizes of 100 to 1000 µm in the second step, and particles having sizes of 100 to 1000 µm in the first step.

According to the present invention, desirably, the concentrations of aerosols are observed in the fourth step, the liquid water content of the light cloud in the third step, the liquid water content of the rain cloud in the second step, and the liquid water content and fall velocity of the rain cloud in the first step.

According to the present invention, desirably, a wavelength of 11 x 10⁴ to 0.25 mm is used in the fourth step, a wavelength of 0.1 to 100 mm in the third step, a wavelength of 100 to 1000 mm in the second step, and a wavelength of 10 to 230 mm in the first step.

### [Advantageous Effects]

According to the present invention, the remote observation system is capable of totally observing condensation nuclei, clouds, and rainfall to detect their mutual relationship through the ground-based verification network composed of the ground observation equipment. According to the present invention, further, the remote observation system is capable of investigating the heights of clouds, the clouds, and the shapes of clouds through the ground and upper-air observation materials obtained from the ground-based verification network composed of the ground observation equipment, updating the repeatedly circulated processes, and applying them thereto.

### [Description of Drawings]

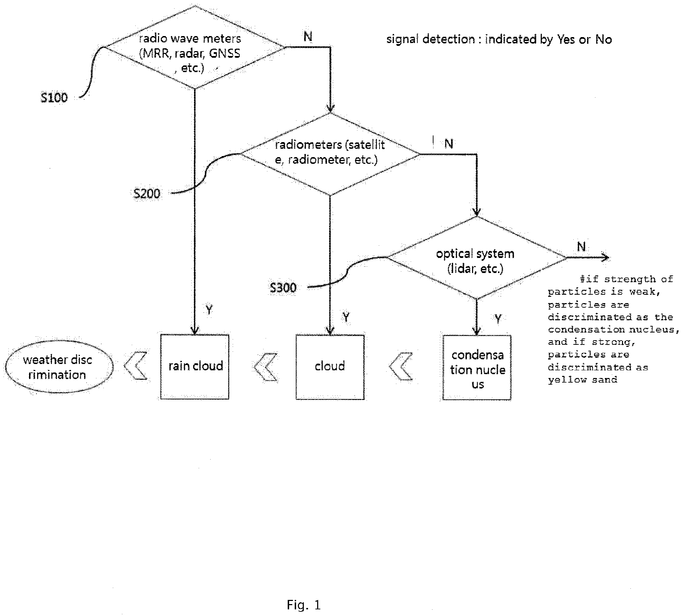

FIG.1 is a flow chart showing a remote observation method for aerosols, clouds and rainfall according to the present invention.

### [Mode for Invention]

Hereinafter, an explanation on a remote observation system and method for aerosols, clouds and rainfall according to the present invention will be in detail given with reference to the attached drawing. In the description, if it is determined that the detailed explanation on the well known technology related to the present invention makes the scope of the present invention not clear, the explanation will be avoided for the brevity of the description. Further, the sizes of the components shown in the drawing may be magnified for the clarity and convenience of the description, and accordingly, they may be not actually applied.

FIG.1 is a flow chart showing a remote observation method for aerosols, clouds and rainfall according to the present invention.

Hereinafter, a remote observation system for aerosols, clouds and rainfall according to the present invention will be explained with reference to Table 1 as will be indicated below.

According to the present invention, the remote observation system includes: a radar 130 for calculating a rain cloud profile; a GNSS 140 for calculating total rain cloud profiles; a radiometer 120 for calculating a light cloud profile; and a lidar 110 for calculating an aerosol profile.

Table 1 briefly shows wavelengths used, objects, object particle sizes, and corresponding microphysics of the lidar 110, the radiometer 120, the radar 130 and the GNSS 140.

**Table 1**

| Division | Lidar | Radiometer | Radar | GNSS (GPS) | Remarks |
|---|---|---|---|---|---|
| Wavelength (mm) used | 11 x 10⁴ ∼ 0.25 | 0.1 ∼ 100 | 10 ∼ 230 | 100 ∼ 1000 (communication time delay use) | |
| Object | Very light cloud* and aerosol profile | Light cloud ** profile | Rain cloud *** profile | Total rain cloud profiles | |
| Object particle size (µm) | 0.1 ∼ 1 | 1 ∼ 100 | 100 ∼ 1000 | 100 ∼ 1000 | |
| Microphysics | Condensation nuclei and Water drop concentrations | Liquid water content | Liquid water content, fall velocity | Liquid water content | profile |

| | | | | | |
|---|---|---|---|---|---|
| * very light cloud: haze ** light cloud: fog, mist *** rain cloud: drizzle, graupel, rainfall, hail | | | | | |

According to the present invention, as briefly indicated in Table 1, the heights of clouds, the clouds, and the shapes of clouds are investigated through ground and upper-air observation materials obtained by using the lidar 110, the radiometer 120, the radar 130 and the GNSS 140, and the repeatedly circulated processes are updated and applied to the system.

The ground observation materials are materials obtained from the radiometer 120 and the radar 130 (for example, a micro rain radar MRR) installed on the ground, observation materials by height as cloud height observation materials are obtained by the lidar 110, and the ground position information is acquired from the GNSS 140 (for example, a GPS satellite).

Hereinafter, an explanation on the lidar 110, the radiometer 120, the radar 130 and the GNSS 140 will be in detail given with reference to Table 1.

According to the present invention, first, the lidar 110 makes use of the wavelength of 11 x 10⁴ to 0.25 mm, observes the concentrations of aerosols (including condensation nuclei, water droplets and so on) having particle sizes of 0.1 to 1 µm, and calculates the profile for the aerosols (which may include very light clouds).

According to the present invention, for example, the lidar 110 has an active type wavelength band of 11 x 10⁴ to 0.25 mm and measures forward scattered light by means of elastic scattering of air molecules and aerosols in the atmosphere in the state where a backscattering coefficient is measured by three wavelengths, an extinction coefficient by two wavelengths, and a depolarization ratio by two wavelengths. Through the lidar 110, aerosols like sulfate polluting air, soot absorbing light, sea salt particles, yellow sand and so on are discriminated to estimate their respective concentration distributions.

According to the present invention, next, the radiometer 120 makes use of a wavelength of 0.1 to 100 mm, observes a liquid water content of the light cloud having a particle size of 1 to 100 µm, and calculates the light cloud profile.

According to the present invention, for example, the radiometer 120 has a passive type wavelength band of 9.6 x 10⁻⁴ to 11.5 x 10⁻⁴ mm and serves as an instrument for observing a vertical air temperature, humidity, precipitable water, and a liquid water content of upper air, which receives long wave radiation and calculates water vapor amount and liquid water content in real time. However, observation errors may occur due to rainfall. When signals are transmitted from ground receiving stations through a convection zone, they are delayed due to various components of troposphere. However, the GPS calculates the precipitable water using the signal delay amount and always observes a value of the precipitable water, irrespective of time and places.

According to the present invention, next, the radar 130 makes use of a wavelength of 10 to 230 mm, observes a liquid water content and a particle fall velocity of a rain cloud having a particle size of 100 to 1000 µm, and calculates the rain cloud profile.

According to the present invention, for example, the radar 130 modulates a high frequency (10 to 230 mm) and continuously radiates electromagnetic waves, not pulses, in an active type radio radiation manner. The radar 130 acquires various information on radar reflectivity and particle size distributions for rain particles from the electromagnetic waves through which the radiated signal is backscattered by a target meaningful meteorologically like rain particles and thus received again to an antenna, obtains the vertical speeds of the particles, and detects whether ascending air current is generated or not. The MRR can provide the vertical profile for reflectivity and terminal velocity of water in a liquid state (including snow) up to the air of 6 km.

According to the present invention, lastly, the GNSS 140 makes use of the communication time delay of a wavelength of 100 to 1000 mm, observes a liquid water content of a rain cloud having a particle size of 100 to 1000 µm, and calculates the total rain cloud profiles.

According to the present invention, for example, the GNSS 140 is a system for acquiring ground position information using GPS satellites operating in the air of 20,200 km. A GPS receiver receives the signals transmitted from three or more GPS satellites and determines its position from the satellites. If the time difference between the signals transmitted from the satellites and the received signals is measured, the distance between the satellites and the receiver can be obtained, and at this time, the information on the satellites is contained in the signals transmitted from the satellites. If the distance between the receiver and the at least three satellites and the positions of the satellites are obtained, the position of the receiver can be calculated in a method like triangulation. Since time synchronization is not completely accurate, however, the position of the receiver is generally determined using four or more satellites so as to perform error compensation. The GPS arranges 24 satellites on six orbits to provide its service, and the signals are transmitted from the satellites using two carrier waves L1 (1575.42 MHz) and L2 (1227.6 MHz).

Now, a remote observation method for aerosols, clouds and rainfall according to the present invention will be explained with reference to FIG.1.

According to the present invention, as shown in FIG.1, the remote observation method includes the steps of: discriminating rain clouds through radio wave meters (MRR, radar, GNSS, etc.) at step S100; discriminating clouds (or light clouds) through radiometers (satellites, radiometer, etc.) at step S200; and discriminating condensation nuclei (or aerosols and very light clouds) through an optical system (lidar, etc.) at step S300.

According to the present invention, if the rain clouds are not discriminated through the radio wave meters (No at step S100), the clouds are discriminated through the radiometers at step 200, and also, if the clouds are not discriminated (No at step S200), the condensation nuclei are discriminated through the optical system at step S300. If the strengths of particles observed through the optical system are weak, the particles are discriminated as the condensation nuclei, and if the strengths thereof are strong, the objects are as yellow sand.

According to the present invention, the step S100 of discriminating the rain clouds through the radio wave meters includes the first step of calculating the rain clouds by means of a radar and the second step of calculating total rain cloud profiles by means of a GNSS, and the step S200 of discriminating the clouds (or light clouds) through radiometers includes the third step of calculating a light cloud profile by means of a radiometer. Further, the step S300 of discriminating the condensation nuclei (or aerosols and very light clouds) through the optical system includes the fourth step of calculating an aerosol profile by means of a lidar.

At the above-mentioned discriminating steps S100 to S300 or at the first to fourth steps, the detailed operations of the radio wave meters (MRR, radar, GNSS, etc.), the radiometers (satellites, radiometer, etc.), and the optical system (lidar, etc.) are the same as in FIG.1 and Table 1.

For example, the radar 130 has a wavelength of 10 to 230 mm, observes a liquid water content and a particle fall velocity of a rain cloud having a particle size of 100 to 1000 µm, and calculates the rain cloud profile (at the first step), and the GNSS 140 makes use of the communication time delay of a wavelength of 100 to 1000 mm, observes a liquid water content and a particle fall velocity of a rain cloud having a particle size of 100 to 1000 µm, and calculates the total rain cloud profiles (at the second step), so that the rain clouds are discriminated through the radar 130 and the GNSS 140 at step S100.

Further, for example, the radiometer 120 makes use of a wavelength of 0.1 to 100 mm, observes a liquid water content of a light cloud having a particle size of 1 to 100 µm, and calculates a light cloud profile (at the third step), thereby discriminating the clouds at step S200.

Furthermore, for example, the lidar 110 makes use of the wavelength of 11 x 10⁴ to 0.25 mm, observes the concentrations of aerosols (including condensation nuclei, water droplets and so on) having particle sizes of 0.1 to 1 µm, and calculates a profile of the aerosol (which may include very light clouds), thereby discriminating the condensation nuclei at step S300.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A remote observation method comprising:
the first step of calculating a rain cloud profile by means of a radar;
the second step of calculating total rain cloud profiles by means of a GNSS;
the third step of calculating a light cloud profile by means of a radiometer; and
the fourth step for calculating an aerosol profile by means of a lidar.

2. The remote observation method according to claim 1, wherein particles having sizes of 0.1 to 1 µm are observed in the fourth step, particles having sizes of 1 to 100 µm in the third step, particles having sizes of 100 to 1000 µm in the second step, and particles having sizes of 100 to 1000 µm in the first step.

3. The remote observation method according to claim 1, wherein the radar modulates a high frequency of 10 to 230 mm to continuously radiate electromagnetic waves in an active type radio radiation manner and acquires the information on radar reflectivity, particle size distributions, and vertical speeds for rain particles from the electromagnetic waves formed by backscattering a radiated signal by a target to receive the radiated signal to an antenna again, and the GNSS acquires ground position information using GPS satellites operating in the air of 20,200 km and is provided with a GPS receiver for receiving the signals transmitted from the three or more GPS satellites to determine the positions of the satellites and the receiver.

4. The remote observation method according to claim 1, wherein the radiometer has a passive type wavelength band of 9.6 x 10⁻⁴ to 11.5 x 10⁻⁴ mm and serves as an instrument for observing a vertical air temperature, humidity, precipitable water, and a liquid water content of upper air by receiving long wave radiation and calculating water vapor amount and liquid water content in real time.

5. The remote observation method according to claim 1, wherein the lidar has an active type wavelength band of 11 x 10⁴ to 0.25 mm and measures forward scattered light by means of elastic scattering of air molecules and aerosols in the atmosphere in the state where a backscattering coefficient is measured by three wavelengths, an extinction coefficient by two wavelengths, and a depolarization ratio by two wavelengths.

6. The remote observation method according to claim 1, wherein the concentrations of the aerosols are observed in the fourth step.

7. The remote observation method according to claim 1, wherein the liquid water content of the light cloud is observed in the third step.

8. The remote observation method according to claim 1, wherein the liquid water content of the rain cloud is observed in the second step.

9. The remote observation method according to claim 1, wherein the liquid water content and fall velocity of the rain cloud are observed in the first step.

10. The remote observation method according to claim 1, wherein a wavelength of 11 x 10⁴ to 0.25 mm is used in the fourth step.

11. The remote observation method according to claim 1, wherein a wavelength of 0.1 to 100 mm is used in the third step.

12. The remote observation method according to claim 1, wherein a wavelength of 100 to 1000 mm is used in the second step.

13. The remote observation method according to claim 1, wherein a wavelength of 10 to 230 mm is used in the first step.
